# FASCICULE DE BREVET EUROPEEN

(11) **EP 1 398 213 B1**
(45) Date de publication et mention de la délivrance du brevet: **08.02.2006**
(21) Numéro de dépôt: 03292242.9
(22) Date de dépôt: 11.09.2003
(51) Int. Cl.: B60Q 1/22, B60Q 1/26

(54) **Dispositif de signalisation perfectionné pour véhicule automobile**
Verbesserte Signaleinrichtung für Kfz
Improved signalling device for vehicles

(30) Priorité: 12.09.2002 FR 0211347
(43) Date de publication de la demande: 17.03.2004
(73) Titulaire: Vignal Systems, 69200 Venissieux (FR)
(72) Inventeur: Molines, Jean-Marc, 93012 Bobigny Cédex (FR); Pichat, Franck, 93012 Bobigny Cédex (FR)
(74) Mandataire: Maureau, Philippe

(56) Documents cités:
- GB-A- 2 306 634
- US-A- 2 321 705

## Description

La présente invention concerne les dispositifs de signalisation pour véhicule automobile, du type de ceux qui sont installés à l'arrière de ce véhicule.

Outre les fonctions de signalisation lumineuse de ces dispositifs, telles que les fonctions de freinage, de changement de direction, de signalisation antibrouillard, ils comportent également la fonction feu de recul, pour améliorer la visibilité du conducteur.

Pour certains véhicules, cette fonction feu de recul peut être accompagnée d'une alarme sonore, destinée à avertir les autres usagers et/ou les piétons que le véhicule a l'intention ou est en train d'effectuer une manoeuvre en marche arrière.

Il est alors courant d'assembler le dispositif de signalisation avec une telle alarme sonore, puis d'en équiper le véhicule lors de son montage en usine.

Par contre, lorsqu'une telle alarme sonore n'est pas installée d'origine sur le véhicule, il n'est pas facile d'en rajouter une sur un dispositif de signalisation qui en est dépourvu. Une telle opération nécessite des interventions spécifiques, tant mécaniques pour la fixation de l'alarme sonore sur la carrosserie du véhicule qu'électriques pour assurer correctement son alimentation.

On connaît du document GB-A-2 306 634 un feu de signalisation pour véhicule industriel, comportant une alarme sonore de recul, qui peut être constituée d'un module connectable pour faciliter la production. Cependant, l'alarme sonore est contenue en majeure partie à l'intérieur du boîtier 18.

On connaît par ailleurs du document US 2 321 705 un feu avant pour véhicule industriel comprenant un boîtier dans lequel est placée une lampe principale. Une lampe de faible intensité est en outre montée sur un dispositif de support disposé et fixé à l'extérieur du boîtier.

La présente invention se place dans ce contexte et elle a pour but de proposer un dispositif de signalisation qui puisse être équipé ou non dès son assemblage d'une alarme sonore, de manière à la proposer en option lors de l'acquisition du véhicule, et qui permette également de rajouter cette option après l'achat du véhicule, en service après-vente ou en accessoire pour personnaliser le véhicule.

La présente invention a donc pour objet un dispositif de signalisation comportant dans un boîtier des sources lumineuses aptes à remplir différentes fonctions de signalisation lumineuse, dont une fonction feu de recul, le boîtier comportant un connecteur pour le branchement d'une fonction de signalisation supplémentaire selon le préambule de la revendication 1.

Selon la présente invention, le branchement de la fonction de signalisation supplémentaire s'effectue par l'extérieur du dispositif de signalisation.

Selon d'autres caractéristiques avantageuses et non limitatives de l'invention :
- la fonction de signalisation supplémentaire est une alarme sonore de recul.
- le connecteur additionnel n'est alimenté que lorsque la fonction feu de recul est activée.
- le connecteur additionnel est relié en parallèle à un connecteur secondaire.

D'autres buts, caractéristiques et avantages de la présente invention ressortiront clairement de la description qui va maintenant être faite d'un exemple de réalisation donné à titre non limitatif en référence aux dessins annexés sur lesquels :
- La Figure 1 représente schématiquement une vue en plan d'un dispositif de signalisation réalisé selon la présente invention,
- La Figure 2 représente une vue en coupe selon la ligne II-II du dispositif de signalisation de la Figure 1, avant l'installation de la fonction de signalisation supplémentaire,
- La Figure 3 représente une vue en coupe selon la ligne II-II du dispositif de signalisation de la Figure 1, après l'installation de la fonction de signalisation supplémentaire, et
- la Figure 4 représente une vue de côté du dispositif de signalisation de la Figure 1.

Sur les différentes Figures, les éléments identiques ou jouant le même rôle sont affectés des mêmes signes de référence. -

On a représenté sur les Figures un dispositif de signalisation, désigné dans son ensemble par la référence 10, qui comporte, de façon connue, dans un boîtier 12, différentes fonctions de signalisation, une seule ayant été représentée pour la clarté du dessin. Ces fonctions de signalisation comportent classiquement des sources lumineuses 11, lampes à incandescence ou diodes électroluminescentes, associées à des systèmes optiques 15 de répartition des rayons lumineux pour obtenir des photométries appropriées à ces fonctions de signalisation.

Le boîtier 12 comporte, également de façon connue, des dispositifs de fixation 14 sur la carrosserie d'un véhicule, un connecteur principal 16 destiné à être relié au faisceau électrique du véhicule, et des connecteurs secondaires 18 destinés chacun à l'alimentation d'une fonction de signalisation lumineuse. Le boîtier 12 est enfin fermé par une glace de protection 20, ayant ou non des propriétés de déviation des rayons lumineux.

Conformément à la présente invention, le boîtier 12 comporte un connecteur additionnel 22, pour le branchement d'une fonction de signalisation supplémentaire telle qu'une alarme sonore de recul 24. Avantageusement, ce connecteur 22 est accessible de l'extérieur du boîtier 12, pour que le branchement de l'alarme sonore 24 puisse s'effectuer sans démontage ou ouverture du dispositif de signalisation 10.

Ainsi, lors de l'assemblage du dispositif de signalisation 10, tous les composants optiques peuvent être installés dans le boîtier 12, puis celui-ci peut être refermé par fixation de la glace 20. On a alors la possibilité d'installer ou non l'alarme sonore 24, par simple insertion de cette alarme 24 dans le connecteur 22.

De même, une fois le dispositif de signalisation 10 fixé sur la carrosserie du véhicule, si le dispositif de signalisation 10 n'a pas été équipé auparavant de l'alarme sonore de recul 24, il sera très facile de l'installer, par simple branchement de cette alarme 24 dans le connecteur 22.

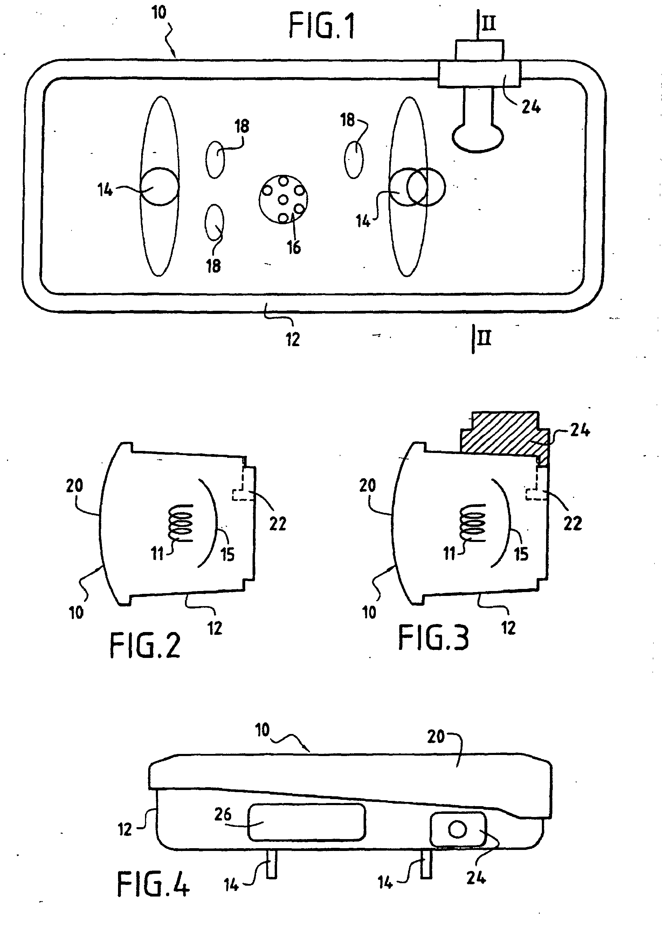

Le dispositif de signalisation 10 présente alors la configuration représentée sur les Figures 3 et 4. On voit sur la Figure 4 que le dispositif de signalisation est équipé de l'alarme sonore 24, située par exemple à côté de la fenêtre 26 permettant l'éclairage de la plaque d'immatriculation du véhicule.

En même temps que l'alarme sonore est branchée dans le connecteur 22, on peut prévoir qu'elle se trouve fixée sur le boîtier 12 par simple encliquetage. En variante, on peut également prévoir de fixer cette alarme par vissage ou par un moyen équivalent.

De préférence, on pourra prévoir que le connecteur additionnel 22 ne soit alimenté que lorsque la fonction feu de recul est activée, de manière à ce que l'alarme sonore de recul fonctionne simultanément à l'allumage de feu de recul. On pourra alors prévoir que le connecteur additionnel 22 soit relié en parallèle au connecteur secondaire 18 commandant l'allumage du feu de recul.

On a donc bien réalisé selon la présente invention un dispositif de signalisation qui peut être équipé ou non dès son assemblage d'une alarme sonore, de manière à la proposer en option lors de l'acquisition du véhicule, et qui permet également de rajouter cette option après l'achat du véhicule, en service après-vente ou en accessoire pour personnaliser le véhicule, ou qui permet encore très simplement le remplacement de cette option.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple qu'on pourra prévoir que le connecteur additionnel alimente une autre fonction de signalisation supplémentaire qu'une alarme sonore de recul, le connecteur additionnel étant alors relié à un autre connecteur secondaire. On pourra également prévoir que le connecteur additionnel soit alimenté en permanence, de manière à ce qu'il joue le rôle d'une prise multifonctions, permettant de disposer à l'arrière du véhicule d'une source de courant alimentée par la batterie du véhicule.

## Revendications

1. Dispositif de signalisation (10) comportant dans un boîtier (12) un connecteur principal (16), des sources lumineuses (11) aptes à remplir différentes fonctions de signalisation lumineuse, dont une fonction feu de recul, le boîtier (12) comportant en outre un connecteur additionnel (22) pour le branchement d'une fonction de signalisation supplémentaire (24), ledit connecteur additionnel (22) étant installé dans le boîtier (12), **caractérisé en ce que** la fonction de signalisation supplémentaire (24) est destinée à être installée à l'extérieur du boîtier (12), le branchement de la fonction de signalisation supplémentaire (24) dans le connecteur additionnel (22) s'effectuant par l'extérieur du dispositif de signalisation (10).

2. Dispositif de signalisation (10) selon la revendication 1, **caractérisé en ce que** la fonction de signalisation supplémentaire (24) est une alarme sonore de recul.

3. Dispositif de signalisation (10) selon la revendication 1, **caractérisé en ce que** le connecteur additionnel (24) n'est alimenté que lorsque la fonction feu de recul est activée.

4. Dispositif de signalisation (10) selon la revendication 1, **caractérisé en ce que** le connecteur additionnel (24) est relié en parallèle à un connecteur secondaire (18).

## Claims

1. Signalling device (10) comprising in a housing (12) a main connector (16) of the light sources (11) able to fulfil various luminous signalling functions, including a reversing light function, the housing (12) moreover comprising an additional connector (22) for wiring up a further signalling function (24), the said additional connector (22) being installed in the housing (12), **characterized in that** the further signalling function (24) is intended to be installed outside the housing (12), the wiring up of the further signalling function (24) in the additional connector (22) being effected from the outside of the signalling device (10).

2. Signalling device (10) according to Claim 1,
**characterized in that** the further signalling function (24) is a reversing sound alarm.

3. Signalling device (10) according to Claim 1,
**characterized in that** the additional connector (24) is energised only when the reversing light function is activated.

4. Signalling device (10) according to Claim 1,
**characterized in that** the additional connector (24) is linked in parallel to a secondary connector (18).

## Patentansprüche

1. Signalisierungsvorrichtung (10), die in einem Gehäuse (12) einen Hauptsteckverbinder (16) der Richtquellen (11), die verschiedene Leuchtsignalisierungsfunktionen erfüllen können, darunter cine Rückfahrlichtfunktion, umfasst, wobei das Gehäuse (12) ferner einen zusätzlichen Steckverbinder (22) zum Anschließen einer zusätzlichen Signalisierungsfunktion (24) umfasst, wobei der zusätzliche Steckverbinder (22) in dem Gehäuse (12) installiert ist, **dadurch** gekennzcichnet, dass die zusätzliche Signalisicrungsfunktion (24) dazu bestimmt ist, außerhalb des Gehäuses (12) installiert zu werden, wobei das Anschließen der zusätzlichen Signalisierungsfunktion (24) in dem zusätzlichen Steckverbinder (22) von außerhalb der Signalisicrungsvorrichtung (10) her erfolgt.

2. Signalisierungsvorrichtung (10) nach Anspruch 1, **dadurch** gekennzejchnet, dass die zusätzliche Signalisierungsfunktion (24) ein akustischer Rückfahralarm ist.

3. Signalisierungsvorrichtung (10) nach Anspruch 1, **dadurch gekennzeichnet, dass** der zusätzliche Steckverbinder (24) nur gespeist wird, wenn die Rückfahrlichtfunktion aktiviert ist.

4. Signalisierungsvorrichtung (10) nach Anspruch 1, **dadurch gekennzeichnet, dass** der zusätzliche Steckverbinder (24) mit einem Sekundärleiter (18) parallel geschaltet ist.
